# EUROPEAN PATENT APPLICATION

(11) **EP 2 662 145 A1**
(43) Date of publication of application: **13.11.2013**
(21) Application number: 13159645.4
(22) Date of filing: 15.03.2013
(51) Int. Cl.: B03B 9/06

(54) **Plant for the treatment and the utilization of municipal solid waste**

(30) Priority: 09.05.2012 IT RM20120204
(71) Applicant: Health Target S.r.l., 00164 Roma (IT)
(72) Inventor: Zullo, Roberto, 00142 Roma (IT); Portese, Marco, 00163 Roma (IT); Marcone, Rosa, 85100 Potenza (IT); Roselli, Roberto, 00127 Roma (IT); Benotto, Giannina, 00132 Roma (IT)
(74) Representative: Boggio, Luigi

(57) **Abstract**

A plant (1) for the treatment and the utilization of municipal solid waste comprising, in operating sequence, a first waste shredding station (3), a selection station (4), in which the waste coming from the first shredding station (3) is selected so as to make sure that metal materials and inert materials are removed, a second shredding station (5), a drying station (6) and an ultra-grinding station (7) and moving means (M), which are suited to move the waste between two adjacent stations. The first shredding station (3) comprises a shredder, which is suited to ensure the shredding of the waste in order to cause it to assume dimensions that are equal to or smaller than 30 cm, the second shredding station (5) comprises a shredder which is suited to perform a shredding that causes the waste to assume dimensions that are equal to or smaller than 3 cm, and the ultra-grinding station (7) comprises a grinding mill, which is able to perform a grinding of the waste until a grain size is reached that is equal to or smaller than 100 microns.

## Description

The present invention relates to a plant for the treatment and the utilization of municipal solid waste.

The problem of waste in recent years has reached dramatic levels, forcing authorities to find solutions to this issue as soon as possible. In this regard, municipal solid waste constitute a particularly complicated type of waste to handle, presenting an extremely heterogeneous composition. Even in places where recycling is most developed, however, there is the problem of managing the part of undifferentiated waste.

The main solution so far has consisted in the accumulation of waste in landfills with the obvious short and long-term problems that this entails.

The need was therefore strongly felt for a methodology capable of utilizing municipal solid waste.

The problem above is combined with the need, also increasingly felt, of having renewable energy sources that can replace at least partially the existing fossil energy sources.

The Applicant has designed a system and a method able to treat municipal solid waste in order to obtain therefrom a micrometer-sized fuel with a high calorific value and suitable for systems such as coal fired power plants, incinerators, cement plants and other combustion plants for the production of electricity.

Subject of the present invention is a plant for the treatment and the utilization of municipal solid waste, whose essential characteristics are reported in claim 1, and whose preferred and/or auxiliary features are set forth in claims 2 and 3. Another object of the present invention is a method for the treatment and the utilization of municipal solid waste, whose essential characteristics are reported in claim 4, and whose preferred and/or auxiliary features are disclosed in claim 5.

For a better understanding of the invention the following an embodiment is described purely by way of illustration and not of limitation with the aid of the annexed figure, which illustrates in highly schematic form the plant object of the present invention according to a preferred embodiment.

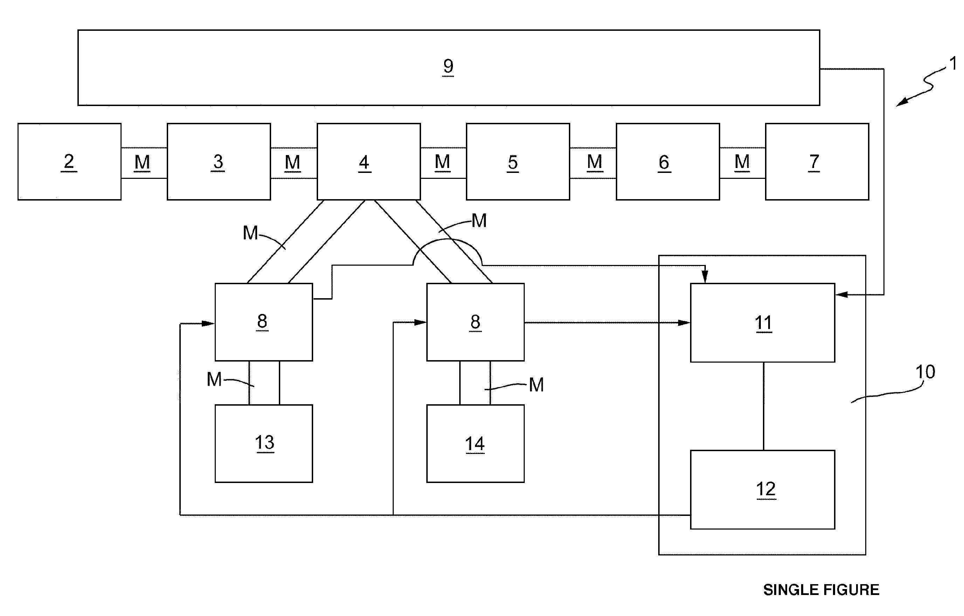

In the figure is indicated in its entirety with 1 the treatment and utilization plant according to the present invention.

The plant 1 comprises a storage station 2 wherein municipal solid waste is deposited in the form of "as is" and/or undifferentiated waste, a first shredding station 3 for shredding the waste coming from the storage station after bulky waste has been removed therefrom, a selection station 4, wherein waste from the first shredding station 3 is selected so as to guarantee the removal of metals (ferrous and nonferrous) and inert materials (glass, ceramic), a second shredding station 5, a drying station 6 and an ultra-grinding station 7.

The stations listed above are connected one to the other by waste movement means M such as conveyor belts.

The first shredding station 3 comprises a shredder consisting of a loading hopper and a crusher in which a rotor with hammer elements imparts shear stress that leads to waste shredding. Under the rotor an evacuation grid is arranged of dimensions such as to ensure the passage of waste with dimensions less than or equal to 30 cm.

The metal and inert materials retrieved in the selection station 4 are washed and then stored to be treated according to the known recycling techniques.

The second shredding station 5 comprises a shredder, which performs shredding that causes the waste itself, coming from the selection station, to assume dimensions that are equal to or smaller than 3 cm.

The drying station 6 is able to bring down the moisture of the waste coming from the second shredding station 5 by the action of a dehumidified hot air jet.

The ultra-grinding station 7 comprises a grinding mill, which is able to perform grinding of the waste until a grain size is reached that is equal to or smaller than 100 microns. The grinding mill can be a roller mil, a ball mill or a planetary mill.

The action of the grinding mill also has the effect of further lowering the humidity up to 5% or to even lower values.

The material that is obtained is a dry powder of particle size less than 100 microns and characterized by a high calorific value.

Preferably, the plant 1 comprises a plurality of washing stations 8 for the cleaning of metallic and/or inert materials removed from waste in the selection station 4 and a collection system 9 of the leachate coming from waste along the entire plant.

The water coming from the washing stations 8 is joined to the leachate coming from the collection system 9 and treated in a water treatment station 10, which comprises in an operating sequence cavitation means 11 and purification means 12.

The water treatment station 10 has the purpose of purifying the water already used in the cleaning stations 8 and present in the leachate obtained in the collection system 9 to be able to reuse it as washing water. In addition, the water treatment station 10 also aims to recuperate oils or generic hydrocarbons and to neutralize heavy metals collected in fact from the washing water or from the leachate itself.

The cavitation means 11 comprise a sonicator or other technology suitable for the same cavitation itself, while the purification means utilize a technology described and claimed in patent application RM2012A000050 on behalf of the Applicant and herein included for reference. Generally speaking, said technology comprises the use of a material for the reclamation of water and solids comprising a composition of red mud composed of at least 20% by weight of iron oxide, at least 15% by weight of alumina, at least 15 % by weight of sodalite and at least 8% by weight of silica oxide, and a graphite composition mixed to the red mud composition and comprises at least 90% by weight of graphite and at least 1% by weight respectively of silicon dioxide, magnesium and iron.

The combined action of cavitation and of the technology cited above allows an efficient purification of water and at the same time an efficient recovery of generic hydrocarbons and neutralization of heavy metals.

Preferably, the plant 1 comprises integrated an aluminum processing station 13, in which, in a closed-system reactor the metal obtained from the selection station 4 is subjected to an alkaline attack by means of a water solution of caustic soda, so as to produce tetrahydroxoaluminate and hydrogen. The hydrogen produced is directly usable in fuel cells as fuel for the production of electricity with high efficiency. As anticipated, the sodium tetrahydroxoaluminate is present in the aqueous phase that is easily converted into solid aluminum oxide trihydrate, useful as an additive for high performance cement.

Preferably, the plant 1 comprises integrated a glass processing station 14, in which in a macerator, the glass obtained from the selection station 4 is grounded until a silicon dioxide powder is obtained that has a grain size smaller than 100 microns. The silicon dioxide powder is then reacted in a reactor with an aqueous solution of caustic soda at room pressure or at a pressure greater than one atmosphere. From this reaction solutions at various concentrations of sodium silicate are obtained useful for different purposes (paints, water purification and water treatment, paper processing, soaps and detergents adhesives and sealants, production of industrial catalysts and gel). Moreover, the part of the powder that does not react with the caustic soda and therefore, is not solubilized, can be used as a coadjuvant material in the absorption processes of heavy metals and other pollutants in liquid matrices.

As is clear from the above description, the plant object of the present invention and the incorporated process have many advantages both environmental and of use flexibility. In fact, in addition to accept any incoming matrix, it has an extreme versatility according to the particular needs of the area and also in the presence of differentiated collection activity.

One of the biggest advantages is to be able to recuperate all secondary raw materials present in the composition entering in the system and ensure a complete recycling of resources.

It also ensures the processing of raw materials of a lesser energy value by generating raw material for other industrial processes.

In particular, the fuel produced, thanks to its particular physical structure, can significantly improve the combustion process and the efficiency in the plants in which it is used. Being finely treated, the fuel product has a high surface and consequently it increases the contact point of the fuel filled into the burners by maximizing, thus, the potential energy contained in the raw material.

## Claims

1. A plant (1) for the treatment and the utilization of municipal solid waste comprising, in operating sequence, a first waste shredding station (3), a selection station (4), in which the waste coming from the first shredding station (3) is selected so as to ensure that metal materials and inert materials are removed, a second shredding station (5), a drying station (6) and an ultra-grinding station (7); said plant comprising moving means (M), which are suited to move the waste between two adjacent stations, a plurality of washing stations (8) for cleaning the metal and/or inert materials, which have been removed from the waste in the selection station (4) and a collection system (9) of the leachate coming from the waste along the entire plant; said first shredding station (3) comprising a shredder, which is suited to ensure the shredding of the waste in order to cause it to assume dimensions that are equal to or smaller than 30 cm; said second shredding station (5) comprising a shredder, which is suited to perform a shredding that causes the waste to assume dimensions that are equal to or smaller than 3 cm; said ultra-grinding station (7) comprising a grinding mill, which is able to perform a grinding of the waste until a grain size is reached that is equal to or smaller than 100 microns; said plant being **characterized by** comprising a water treatment station (10) in which the water coming from the washing stations (8) and the leachate coming from the collection system (9) are treated; said water treatment station (10) comprising, in an operating sequence, cavitation means (11) and water purification means (12), which are suited to recover the hydrocarbons and to neutralize the heavy metals.

2. The plant (1) for the treatment and the utilization of municipal solid waste according to claim 1, **characterized in that** said grinding mill can be a roller mill, a ball mill or a planetary mill.

3. The plant (1) for the treatment and the utilization of municipal solid waste according to claim 1 or 2, **characterized by** comprising, integrated, an aluminum processing station (13) in which the metal obtained from the selection station (4) is subjected to an alkaline attack by means of a water solution of caustic soda in a closed-system reactor so as to produce tetrahydroxoaluminate and hydrogen, and a glass processing station (14), in which, in a macerator, the glass obtained from the selection station (4) is grounded, until a silicon dioxide powder is obtained that has a grain size smaller than 100 microns.

4. A method for the treatment and the utilization of municipal solid waste comprising, in operating sequence, a first waste shredding step, a selection step, wherein the waste coming from the first shredding station is selected so as to make sure that metal materials and inert materials are removed, a second shredding step, a drying step and an ultra-grinding step; said process comprising a washing step for cleaning the metal and/or inert materials which have been removed from the waste in the selection step and a collection step of the leachate coming from waste; said first shredding step being suited to ensure the shred of the waste, in order to cause it to assume dimensions that are equal to or smaller than 30 cm; said second shredding station being suited to perform a shredding that causes the waste to assume dimensions that are equal to or smaller than 3 cm; said ultra-grinding step being suited to perform a grinding of the waste until a grain size is reached that is equal to or smaller than 100 microns; said process being **characterized by** comprising a step of water treatment in which the water coming from the washing step and the leachate coming from the collection step are treated; said water treatment step comprising in operating sequence a cavitation operation and a purification operation, which are suited to recover the hydrocarbons and to neutralize the heavy metals.

5. The method for the treatment and the utilization of municipal solid waste according to claim 4, **characterized by** comprising a processing aluminum step, in which, the metal obtained from the selection step is subjected to an alkaline attack by means of a water solution of caustic soda, so as to produce tetrahydroxoaluminate and hydrogen, and a glass processing step, where the glass obtained from the selection step is grounded until a silicon dioxide powder is obtained that has a grain size smaller than 100 microns.
